# EUROPÄISCHE PATENTSCHRIFT

(11) **EP 0 645 530 B1**
(45) Veröffentlichungstag und Bekanntmachung des Hinweises auf die Patenterteilung: **14.05.1997**
(21) Anmeldenummer: 94114493.3
(22) Anmeldetag: 15.09.1994
(51) Int. Cl.: F02B 27/02

(54) **Brennkraftmaschine mit einem Luftansaugsystem**
Internal combustion engine with air supply system
Moteur à combustion interne avec système d'admission d'air

(30) Priorität: 29.09.1993 DE 4333053
(43) Veröffentlichungstag der Anmeldung: 29.03.1995
(73) Patentinhaber: ADAM OPEL AG, 65423 Rüsselsheim (DE)
(72) Erfinder: Breidenbach, Paul, Dipl.-Ing., D-55234 Bechenheim (DE)
(74) Vertreter: Bergerin, Ralf, Dipl.-Ing.

(56) Entgegenhaltungen:
- EP-A- 0 355 960
- DE-A- 3 807 193
- DE-A- 3 814 836
- DE-A- 3 940 486

## Beschreibung

Die Erfindung betrifft eine Brennkraftmaschine mit einem Luftansaugsystem, welches die im Oberbegriff des Patentanspruchs 1 angegebenen Merkmale aufweist.

Es hat sich gezeigt, daß Luftschwingungen im Luftansaugsystem von Brennkraftmaschinen genutzt werden können, um die Aufladung von Verbrennungsräumen mit Verbrennungsluft positiv zu beeinflussen. Jeder Drehzahl des Motors ist bei Vollast eine bestimmte, optimale Saugrohrausbildung zuzuordnen, um den maximalen gasdynamischen Nachladeeffekt zu erreichen. Von der Brennkraftmaschine kann ein hohes Drehmoment abgegeben werden, wenn im unteren Drehzahlbereich lange und dünne Saugrohre gasdynamisch wirksam sind, im oberen Drehzahlbereich aber kurze Saugrohre mit größerem Innendurchmesser genutzt werden.

Durch die DE 36 08 310 A1, bzw. die DE-A-39 40486, bei der ein Drehschieber und eine darin angeordnete separate Steuerhülse vorgesehen sind, die die effektive Saugrohrlänge und den effektiven Eintrittsquerschnitt in die Saugrohre bestimmen, ist eine Vorrichtung zur stufenlosen Veränderung der Länge eines Luftansaugrohres bekannt. Die Luftansaugrohre sind etwa um 360° um ein Sammelsaugrohr verwunden. Das Sammelsaugrohr wird von einem hohlzylindrischen Drehkörper gebildet, der eine Innenwandung der ihn umgebenden Saugrohre bildet und mit je einer Öffnung zum Innenraum der Saugrohre versehen ist. Luft wird durch die Saugrohre, die Öffnungen und das Sammelsaugrohr in Richtung der Verbrennungsräume gesaugt. Durch Verdrehen des Drehkörpers mit den Öffnungen kann eine variable Saugrohrlänge genutzt werden. Eine Steuerung der Luftmenge kann über eine im Sammelsaugrohr befindliche Drosselklappe vorgenommen werden. Im Bereich der Drosselklappe und der Öffnungen des Sammelsaugrohres finden starke Luftverwirbelungen statt, was den Wirkungsgrad des Prozesses verschlechtert. Sehr problematisch und aufwendig ist es, das Sammelsaugrohr zu den einzelnen Saugrohren hin abzudichten.

Eine vergleichbare Gestaltung ist bei dem Luftansaugsystem nach der DE 37 14 953 A1 erkennbar. Der Außenradius der Saugrohre, die auch hier um ein Sammelsaugrohr gewunden sind, nimmt mit zunehmender durchströmter Länge der Saugrohre ab. Dadurch werden gasdynamische Wirkungen im weiter oben beschriebenen Sinn positiv beeinflußt. Auch hier ist jedoch ein zusätzliches Drosselorgan erforderlich, die Luft wird stark verwirbelt und die Abdichtung des Systems ist nur mit hohem Aufwand erreichbar.

Der Erfindung liegt die Aufgabe zugrunde, ein relativ einfaches Luftansaugsystem für eine Brennkraftmaschine zu schaffen, das bei Ausnutzung gasdynamischer Vorgänge eine optimale Gasaufladung mit hohem Wirkungsgrad ermöglicht.

Zur Lösung dieser Aufgabe zeichnet sich die Brennkraftmaschine durch die im kennzeichnenden Teil des Patentanspruchs 1 angegebenen Merkmale aus. Weitere Merkmale ergeben sich aus den Patentansprüchen 2 bis 9.

Im Luftansaugsystem der erfindungsgemäßen Brennkraftmaschine sind die Mittel zur Veränderung der wirksamen Saugrohrlänge und das Drosselorgan zur Luftmengensteuerung in einem Steuerelement, insbesondere in einem zendrehschieber, vereinigt. Der Walzendrehschieber ist etwa zylindrisch ausgebildet und gesteuert um eine Zylinderachse verdrehbar sowie ebenfalls gesteuert begrenzt in Richtung dieser Zylinderachse verschiebbar im Luftansaugsystem gelagert. Ein Freiheitsgrad des Walzendrehschiebers ist zur Saugrohrlängensteuerung erforderlich, der zweite Freiheitsgrad wird zur Luftmengenregulierung genutzt.

Bei den bekannten Luftansaugsystemen, bei denen, wie weiter oben beschrieben, die Saugrohrlängenvariation durch Verdrehen eines hohlzylindrischen Drehkörpers erfolgt, kann eine Drosselklappe entfallen, wenn der Drehkörper auch axial verschiebbar gelagert wird. Damit ist der Querschnitt der Öffnungen zwischen Drehkörper und Saugrohren veränderbar und das Drosseln kann so, unabhängig von der eingestellten Saugrohrlänge, ebenfalls durch Bewegung des Drehkörpers erfolgen. Die genannten Probleme bei der Abdichtung dieses Systems bleiben aber bestehen.

Eine günstige Anordnung eines Walzendrehschiebers ist gegeben, wenn dieser etwa senkrecht zu von den Saugrohrwindungen definierten Ebenen steht, aber nicht eine Innenwandung der Saugrohre bildet, sondern diese Saugrohre im Kreuzungsbereich der Windungen schneidet. Durch Positionsveränderung des Walzendrehschiebers ist vorwählbar, ob die Verbrennungsluft über die Windung (langer Weg) oder bei Überbrückung der Windung (kurzer Weg) angesaugt wird. Diese zweistufige Veränderung der Saugrohrlänge kann durch axiales Verschieben oder durch Verdrehen des Walzendrehschiebers erfolgen. Der jeweils übrigbleibende Freiheitsgrad des Walzendrehschiebers ist zur Drosselung des Motors nutzbar.

Unabhängig von dem Typ der Brennkraftmaschine ist es möglich, das gesamte Luftansaugsystem über nur einen Walzendrehschieber zu steuern, was auch für V-Motoren gilt.

Die Steuerung der Position des Walzendrehschiebers kann über an sich bekannte Verstellmittel in Abhängigkeit von vorgegebenen Sollwerten (z. B. Gaspedalstellung) und zusätzlich automatisch in Abhängigkeit von Betriebskennwerten der Brennkraftmaschine erfolgen.

Die detaillierte Beschreibung der Erfindung erfolgt anhand von Ausführungsbeispielen. In den dazugehörigen schematischen Zeichnungen zeigt:
- Fig. 1:: Seitenansicht eines Luftansaugsystems einer vierzylindrigen Brennkraftmaschine bei Einstellung einer großen Saugrohrlänge und Weglassung aller sonstigen Details der Brennkraftmaschine;
- Fig. 2:: Schnitt II - II aus Fig. 1;
- Fig. 3:: Schnitt III - III aus Fig. 1;
- Fig. 4:: Seitenansicht des Luftansaugsystems nach Fig. 1 bei Einstellung einer geringen Saugrohrlänge;
- Fig. 5:: Schnitt V - V aus Fig. 4;
- Fig. 6:: Ansicht nach Fig. 5 bei vollständig gedrosselter Brennkraftmaschine;
- Fig. 7:: Schnitt durch ein Luftansaugsystem anderer Ausführung bei Einstellung einer großen Saugrohrlänge;
- Fig. 8:: Ansicht nach Fig. 7 bei Einstellung einer geringen Saugrohrlänge.

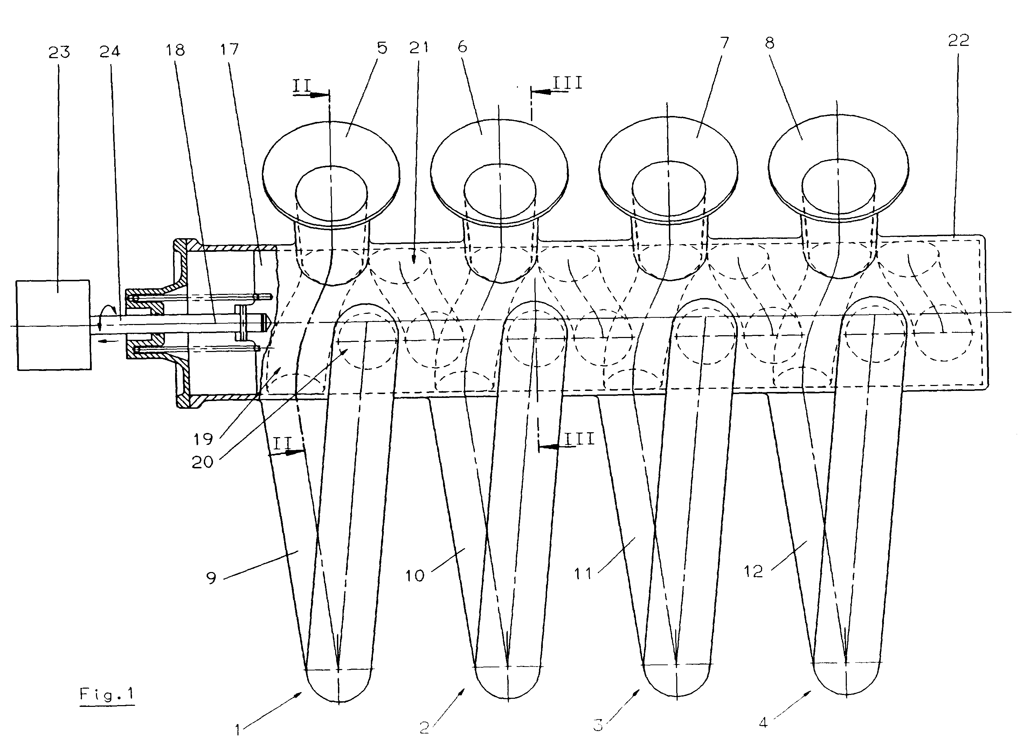

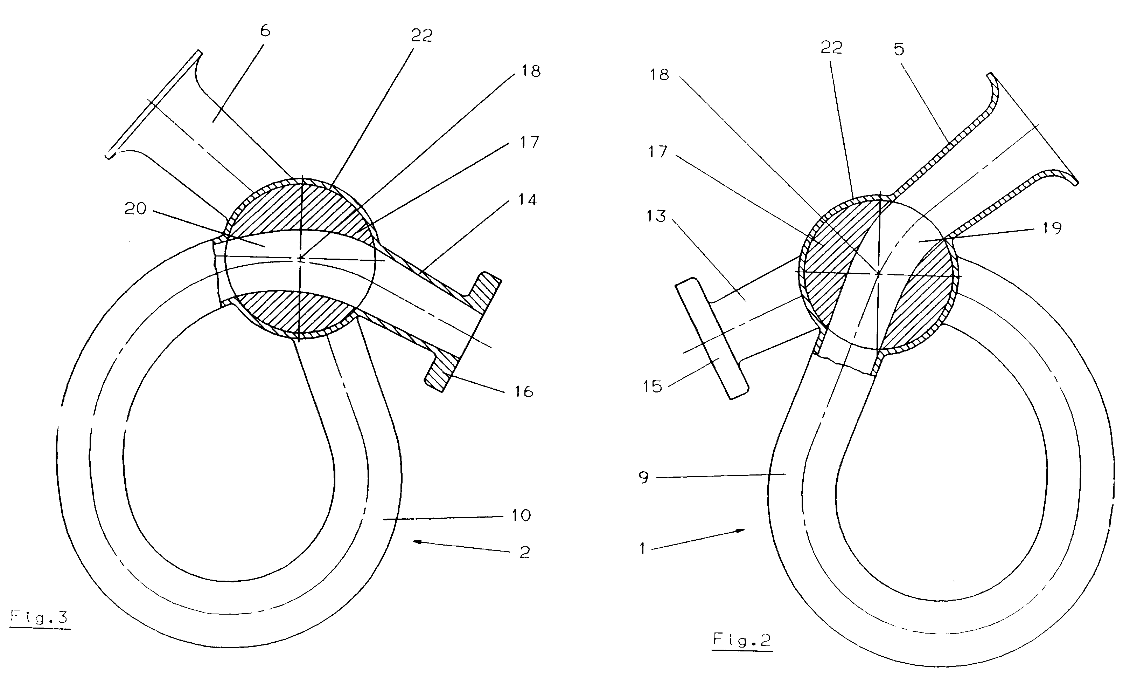

In Fig. 1 ist ein Luftansaugsystem einer vierzylindrigen Brennkraftmaschine mit vier um etwa 360° verwundenen Saugrohren 1 bis 4 dargestellt. Die Saugrohre 1 bis 4 bestehen jeweils aus einem kurzen Ansaugstutzen 5 bis 8 (die alle an einem Ansaugverteilerraum angeschlossen sein können), je einer Windung 9 bis 12 und aus einem Endstück 13, 14, welches in Fig. 1 verdeckt, aber in den Fig. 2 und 3 gezeigt ist. Die Endstücke 13, 14 sind über Flansche 15, 16 am Motorblock anzuschließen und führen zu Lufteinlaßkanälen im Zylinderkopf der Brennkraftmaschine. Die Saugrohre 1 bis 4 sind in einer engen Spiralform verwunden.

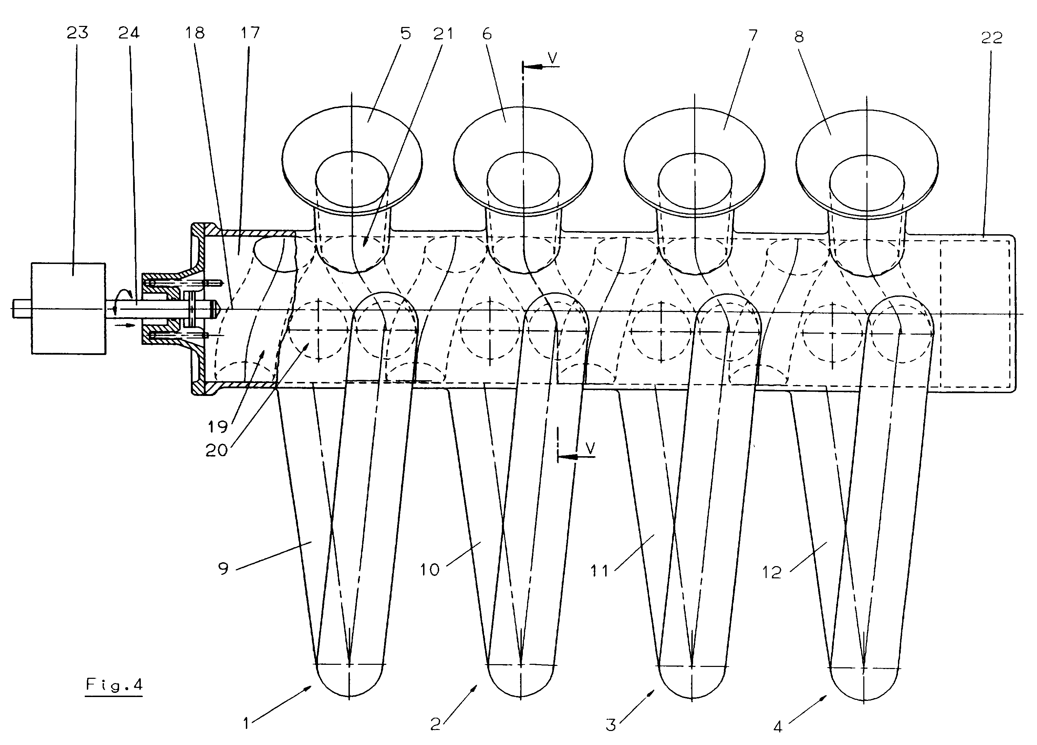

Etwa senkrecht zu von den Windungen 9 bis 12 der Saugrohre 1 bis 4 gebildeten Ebenen ist ein zylindrischer Walzendrehschieber 17 so gelagert, daß er die Saugrohre 1 bis 4 im Bereich von Kreuzungen ihrer Windungen 9 bis 12 schneidet. Dabei erfolgt die Lagerung derart, daß der Walzendrehschieber 17 begrenzt um eine Zylinderachse 18 verdrehbar und in Richtung dieser Zylinderachse 18 verschiebbar ist. Der Walzendrehschieber 17 weist zwölf Querkanäle 19, 20, 21 auf, wovon jeweils drei für jeweils ein zugehöriges Saugrohr 1 bis 4 bestimmt sind. Je nach eingestellter Position des Walzendrehschiebers 17 (in axialer Richtung) vervollständigen entweder die Querkanäle 19 und 20 die im Bereich des Walzendrehschiebers 17 unterbrochenen Windungen 9 bis 12 der Saugrohre 1 bis 4, oder die Windungen 9 bis 12 werden durch den Querkanal 21 überbrückt, wobei letzteres in den Fig. 4 bis 6 verdeutlicht ist. Die beiden möglichen Positionen des zendrehschiebers 17 werden durch axiales Verschieben relativ zu den Saugrohren 1 bis 4 eingestellt. Befindet sich der Walzendrehschieber 17 in der äußerst rechten Position (Fig. 1 bis 3), kann Verbrennungsluft von den Ansaugstutzen 5 bis 8 über die Querkanäle 19, die Windungen 9 bis 12 und die Querkanäle 20 in die Endstücke 13, 14 strömen. Eine große Ansaugrohrlänge ist gasdynamisch wirksam. Ist der Walzendrehschieber 17 in die äußerst linke Position überführt worden (Fig. 4 bis 6), kann die Ansaugluft nur direkt von den Ansaugstutzen 5 bis 8 über die Querkanäle 21 in die Endstücke 13, 14 strömen. Es sind dann also sehr kurze Ansaugrohre gasdynamisch wirksam.

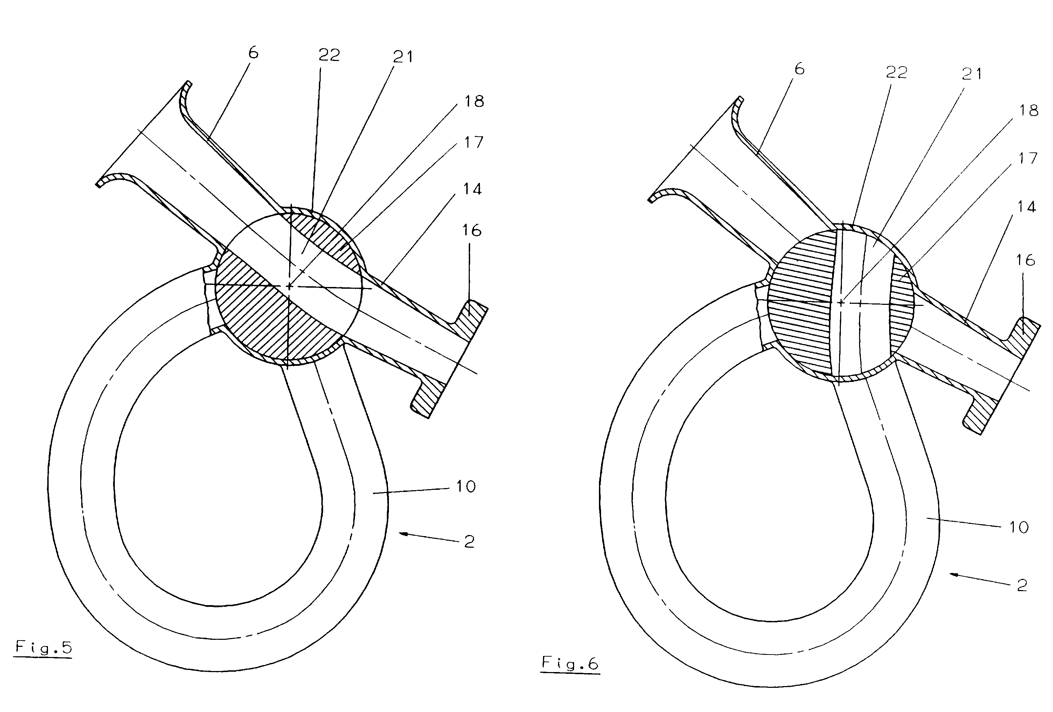

Zusätzlich ist der Querschnitt der Saugrohre 1 bis 4 durch Verdrehung des Walzendrehschiebers 17 um seine Zylinderachse 18 veränderbar, da sich dabei die Position der Querkanäle 19 bzw. 21 zu den Ansaugstutzen 5 bis 8 und die Position der Querkanäle 20 bzw. 21 zu den Endstücken 13, 14 verändert. Somit ist durch Verdrehen des Walzendrehschiebers 17 der minimale Saugrohrquerschnitt bis zur vollständigen Drosselung auf den Wert 0 einstellbar (Fig. 6), wobei die Querkanäle 19 bis 21 dann durch ein Drehschiebergehäuse 22 verschlossen werden.

Die exakte Position des Walzendrehschiebers 17 ist über Verstellmittel 23 an sich bekannter Art vorwählbar. Durch die Verstellmittel 23, die an einer Welle 24 des Walzendrehschiebers 17 angreifen, wird der Walzendrehschieber 17 vollautomatisch in Abhängigkeit von den momentanen Betriebskennwerten der Brennkraftmaschine axial verschoben. Des weiteren kann der Walzendrehschieber 17 mechanisch verdreht werden, was in Abhängigkeit von der Stellung eines Gaspedals erfolgt. Beispielsweise kann ein Seilzug zwischen dem Gaspedal und der Welle 24 vorgesehen sein.

Somit sind die Mittel zur zweistufigen Veränderung der Saugrohrlänge und das Drosselorgan zur Luftmengensteuerung baulich in dem Walzendrehschieber 17 vereinigt. Die Luftzuführung zur Brennkraftmaschine erfolgt unter optimalen Bedingungen bei einem sehr guten Wirkungsgrad.

Das beschriebene System kann auch Anwendung finden, wenn die Ansaugluft (bei anderer Ausführung eines Walzendrehschiebers) axial durch den Walzendrehschieber geführt wird, dieser also als Luftsammelkanal wirkt. Ist der Walzendrehschieber zentral in den Windungen der Saugrohre angeordnet und bildet er eine Innenwandung derselben, kann durch Verdrehen des Walzendrehschiebers eine stufenlose Saugrohrlängenvariation erfolgen. Gleichzeitig kann aber auch durch axiales Verschieben des Walzendrehschiebers eine Drosselung der Brennkraftmaschine stattfinden.

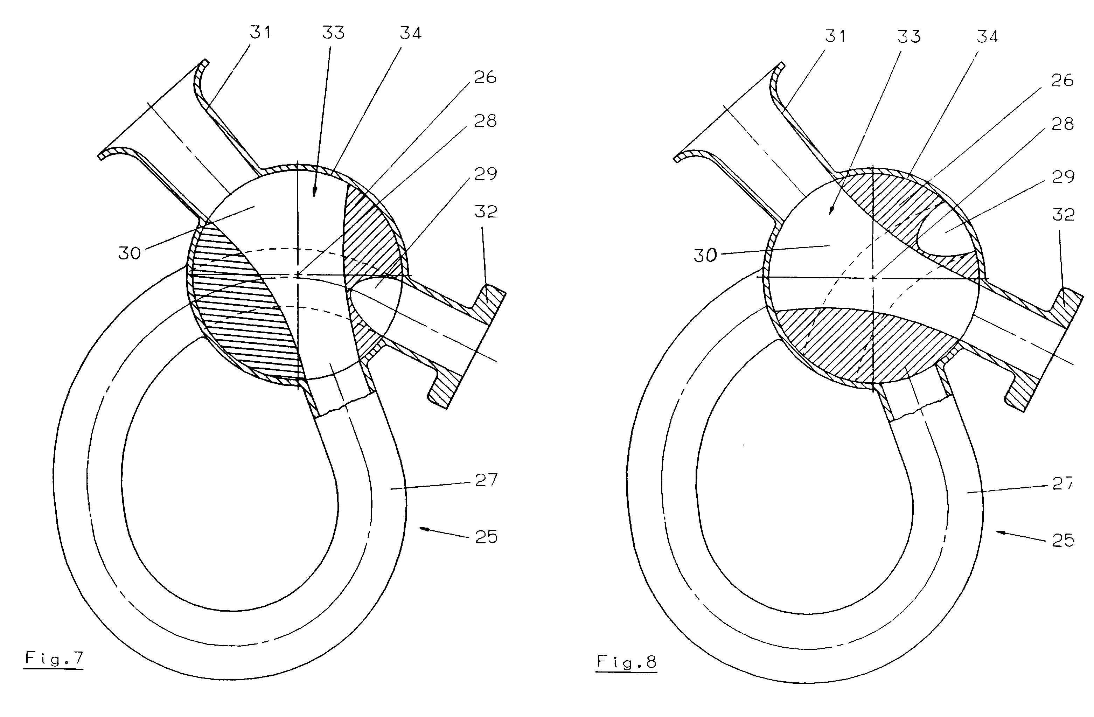

Ein anderes Ausführungsbeispiel der Erfindung ist schematisch in den Fig. 7 und 8 gezeigt. Hier ist ein Saugrohr 25 dargestellt, wobei ebenfalls wie im ersten Ausführungsbeispiel, ein Walzendrehschieber 26 im Kreuzungsbereich einer Windung 27 des Saugrohres 25 angeordnet ist. Eine Zylinderachse 28 steht etwa senkrecht auf der von der Windung 27 gebildeten Ebene. Der Walzendrehschieber 26 weist je Saugrohr 25 zwei Querkanäle 29, 30 auf, wobei der Querkanal 30 verzweigt ist. In der in Fig. 7 gezeigten Stellung des Walzendrehschiebers 26 wird die Windung 27 zwischen einem Ansaugstutzen 31 und einem Endstück 32 des Saugrohres 25 geschaltet. Damit ist eine große Saugrohrlänge (unterer Drehzahlbereich) wirksam. Wird der Walzendrehschieber 26 aus der in Fig. 7 gezeigten Stellung entgegen Uhrzeigersinn in die in Fig. 8 dargestellte Position überführt, ist eine Verzweigung 33 mit dem Ansaugstutzen 31 verbunden und die Windung 27 wird von dem Querkanal 30 überbrückt. Eine geringe Saugrohrlänge ist gasdynamisch wirksam (oberer Drehzahlbereich). Gleichzeitig wird der Querkanal 29 von einem Drehschiebergehäuse 34 verschlossen. Das Verstellen der Saugrohrlänge erfolgt bei diesem Ausführungsbeispiel der Erfindung also durch Verdrehen des Walzendrehschiebers 26 um seine Zylinderachse 28. Eine Drosselung der Brennkraftmaschine ist durch axiales Verschieben des Walzendrehschiebers 26 vorzunehmen, wobei sich dabei der wirksame Querschnitt der Querkanäle 29, 30 verändert. Die Verstellmittel hierzu können in einer mit dem ersten Ausführungsbeispiel vergleichbaren Weise gestaltet sein. Auch hier liegen insgesamt sehr gute Strömungsverhältnisse vor und die Abdichtung des Luftansaugsystems ist baulich einfach realisierbar.

## Patentansprüche

1. Brennkraftmaschine mit einem Luftansaugsystem zur Weiterleitung von Verbrennungsluft an zumindest einen Zylinderraum, das aus einem oder mehreren, um mehr als 180° verwundenen Saugrohr bzw. Saugrohren (1 - 4; 25) und aus Mitteln zur gesteuerten Veränderung der wirksamen Saugrohrlänge besteht sowie zumindest ein gesteuert bewegliches Drosselorgan umfaßt, **dadurch gekennzeichnet**, daß die Mittel zur Veränderung der Saugrohrlänge und das Drosselorgan zur Luftmengensteuerung baulich in einem etwa zylindrischen Walzendrehschieber (17; 26) vereinigt sind, der gesteuert um seine Zylinderachse (18; 28) verdrehbar und ebenfalls gesteuert begrenzt in Richtung der Zylinderachse (18; 28) verschiebbar ist.

2. Brennkraftmaschine mit einem Luftansaugsystem nach Anspruch 1, **dadurch gekennzeichnet**, daß die Steuerung der wirksamen Saugrohrlänge in an sich bekannter Weise durch Verdrehen des Walzendrehschiebers um seine Zylinderachse erfolgt und die Luftmengensteuerung durch lineare Verschiebung des Walzendrehschiebers vorzunehmen ist, wobei der Walzendrehschieber hohlzylindrisch ausgebildet, am Umfang mit einer Öffnung je Saugrohr versehen ist und eine Begrenzungswand der ihn bereichsweise umschlingenden Saugrohre bildet.

3. Brennkraftmaschine mit einem Luftansaugsystem nach Anspruch 1, **dadurch gekennzeichnet**, daß eine zweistufige Steuerung der wirksamen Saugrohrlänge durch lineares Verschieben des Walzendrehschiebers (17) in eine von zwei möglichen Positionen erfolgt und die Luftmengensteuerung durch begrenztes Verdrehen des Walzendrehschiebers (17) vorzunehmen ist, wobei der Walzendrehschieber (17) zwei Querkanäle (19, 20) aufweist, die in einer Position des Walzendrehschiebers (17) Abschnitte einer Windung (9 - 12) des Saugrohres (1 - 4) bilden und wobei der Walzendrehschieber (17) einen weiteren Querkanal (21) aufweist, der in der anderen Position des Walzendrehschiebers (17) die Windung (9 - 12) des Saugrohres (1 - 4) überbrückt.

4. Brennkraftmaschine mit einem Luftansaugsystem nach Anspruch 1, **dadurch gekennzeichnet**, daß eine zweistufige Steuerung der wirksamen Saugrohrlänge durch Verdrehen des Walzendrehschiebers (26) in eine von zwei möglichen Positionen erfolgt und die Luftmengensteuerung durch begrenztes Verschieben des Walzendrehschiebers (26) vorzunehmen ist, wobei der Walzendrehschieber (26) einen Querkanal (29) aufweist, der in einer Position des Walzendrehschiebers (26) einen Abschnitt einer Windung (27) des Saugrohres (25) bildet, und ein weiterer, verzweigter Querkanal (30) im Walzendrehschieber (26) vorgesehen ist, der in der ersten Position des Walzendrehschiebers (26) ebenfalls einen Abschnitt der Windung (27) des Saugrohres (25) bildet und in einer zweiten Position des Walzendrehschiebers (26) durch die Verzweigung (33) die Windung (27) des Saugrohres (25) überbrückt.

5. Brennkraftmaschine mit einem Luftansaugsystem nach Anspruch 3 oder 4, **dadurch gekennzeichnet**, daß die Windung (9 - 12; 27) des Saugrohres (1 - 4; 25) durch den Walzendrehschieber (17; 26) zumindest einseitig verschlossen ist, wenn der Walzendrehschieber (17; 26) in der die Windung überbrückenden Position ist.

6. Brennkraftmaschine mit einem Luftansaugsystem nach einem der Ansprüche 3 bis 5, **dadurch gekennzeichnet**, daß die Querkanäle (19, 20, 21; 29, 30) sich nicht schneiden und annähernd quer zur Zylinderachse (18; 28) im Walzendrehschieber (17; 26) angeordnet sind.

7. Brennkraftmaschine mit einem Luftansaugsystem nach einem der Ansprüche 1 bis 6, **dadurch gekennzeichnet**, daß die Zylinderachse (18; 28) des Walzendrehschiebers (17; 26) etwa senkrecht zu durch die Windungen (9 - 12; 27) der Saugrohre (1 - 4; 25) definierten Ebenen steht.

8. Brennkraftmaschine mit einem Luftansaugsystem nach einem der Ansprüche 1 bis 7, **dadurch gekennzeichnet**, daß je Brennkraftmaschine nur ein Walzendrehschieber (17; 26) vorgesehen ist.

9. Brennkraftmaschine mit einem Luftansaugsystem nach einem der Ansprüche 1 bis 8, **dadurch gekennzeichnet**, daß Verstellmittel (23) mit dem Walzendrehschieber (17; 26) verbunden sind und die Position des Walzendrehschiebers (17; 26) in Abhängigkeit von vorgegebenen Sollwerten und von Betriebskennwerten der Brennkraftmaschine über die Verstellmittel (23) festlegbar ist.

## Claims

1. Internal combustion engine with an air intake system for passing combustion air on to at least one cylinder chamber, which consists of one or more intake pipes (1-4; 25) twisted through more than 180° and means for controlled variation of the effective intake pipe length and also includes at least one choke member of controlled mobility, characterised in that the means for varying the intake pipe length and the choke member for air quantity control are structurally combined in a more or less cylindrical rotary roller slide valve (17; 26) which is rotatable about its cylinder axis (18; 28) in controlled fashion and slidable in the direction of the cylinder axis (18; 28) to a limited extent also in controlled fashion.

2. Internal combustion engine with an air intake system according to claim 1, characterised in that control of the effective intake pipe length in a manner known in the art takes place by rotation of the rotary roller slide valve about its cylinder axis and air quantity control is to be performed by linear sliding of the rotary roller slide valve, wherein the rotary roller slide valve is of hollow cylindrical construction, provided at the circumference with an opening for each intake pipe and forms a boundary wall of the intake pipes encompassing it in some regions.

3. Internal combustion engine with an air intake system according to claim 1, characterised in that two-stage control of the effective intake pipe length takes place by linear sliding of the rotary roller slide valve (17) into one of two possible positions and air quantity control is to be performed by limited rotation of the rotary roller slide valve (17), wherein the rotary roller slide valve (17) comprises two transverse channels (19, 20) which in one position of the rotary roller slide valve (17) form sections of a loop (9-12) of the intake pipe (1-4) and wherein the rotary roller slide valve (17) comprises an additional transverse channel (21) which in the other position of the rotary roller slide valve (17) bridges the loop (9-12) of the intake pipe (1-4).

4. Internal combustion engine with an air intake system according to claim 1, characterised in that two-stage control of the effective intake pipe length takes place by rotation of the rotary roller slide valve (26) into one of two possible positions and air quantity control is to be performed by limited sliding of the rotary roller slide valve (26), wherein the rotary roller slide valve (26) comprises a transverse channel (29) which in one position of the rotary roller slide valve (26) forms a section of a loop (27) of the intake pipe (25), and in the rotary roller slide valve (26) is provided an additional branched transverse channel (30) which in the first position of the rotary roller slide valve (26) also forms a section of the loop (27) of the intake pipe (25) and in a second position of the rotary roller slide valve (26) by the branch (33) bridges the loop (27) of the intake pipe (25).

5. Internal combustion engine with an air intake system according to claim 3 or 4, characterised in that the loop (9-12; 27) of the intake pipe (1-4; 25) is closed on at least one side by the rotary roller slide valve (17; 26) when the rotary roller slide valve (17; 26) is in the position bridging the loop.

6. Internal combustion engine with an air intake system according to any of claims 3 to 5, characterised in that the transverse channels (19, 20, 21; 29, 30) do not intersect with each other and are arranged approximately transversely to the cylinder axis (18; 28) in the rotary roller slide valve (17; 26).

7. Internal combustion engine with an air intake system according to any of claims 1 to 6, characterised in that the cylinder axis (18; 28) of the rotary roller slide valve (17; 26) is more or less perpendicular to planes defined by the loops (9-12; 27) of the intake pipes (1-4; 25).

8. Internal combustion engine with an air intake system according to any of claims 1 to 7, characterised in that only one rotary roller slide valve (17; 26) is provided for each internal combustion engine.

9. Internal combustion engine with an air intake system according to any of claims 1 to 8, characterised in that adjusting means (23) are connected to the rotary roller slide valve (17; 26) and the position of the rotary roller slide valve (17; 26) can be fixed by the adjusting means (23) as a function of predetermined nominal values and operating parameters of the internal combustion engine.

## Revendications

1. Moteur à combustion interne comportant un système d'admission d'air pour amener de l'air de combustion à au moins une chambre de cylindre, lequel système d'admission d'air est formé d'une ou de plusieurs tubulures d'admission (1 - 4; 25) enroulées sur plus de 180° et de moyens pour faire varier de manière contrôlée la longueur efficace de la tubulure d'admission et comprend au moins un organe d'étranglement mobile commandé, caractérisé par le fait que les moyens pour faire varier la longueur de la tubulure d'admission et l'organe d'étranglement pour le contrôle du débit d'air sont réunis sur le plan de la construction en une vanne rotative (17, 26) sensiblement cylindrique, qui peut tourner de manière commandée autour de son axe de cylindre (18; 28) et peut coulisser également de manière commandée et de manière limitée dans la direction de l'axe de cylindre (18; 28).

2. Moteur à combustion interne comportant un système d'admission d'air selon la revendication 1, caractérisé par le fait que le réglage de la longueur efficace de la tubulure d'admission a lieu de manière connue en soi par rotation de la vanne rotative autour de son axe de cylindre et que le réglage du débit d'air est opéré par déplacement linéaire de la vanne rotative, la vanne rotative étant agencée sous la forme d'un cylindre creux dont la paroi est pourvue d'une ouverture pour chaque cylindre et qui forme une paroi de limitation des tubulures d'admission qui l'entourent localement.

3. Moteur à combustion interne comportant un système d'admission d'air selon la revendication 1, caractérisé par le fait que le réglage de la longueur efficace de la tubulure d'admission a lieu en deux étapes par déplacement linéaire de la vanne rotative (17) dans une position parmi deux positions possibles et que le réglage du débit d'air est réalisé par rotation limitée de la vanne rotative (17), la vanne rotative (17) comportant deux canaux transversaux (19, 20) qui, dans une position de la vanne rotative (17), forment des tronçons d'une boucle (9 - 12) de la tubulure d'admission (1 - 4) et la vanne rotative (17) comportant un canal transversal (21) supplémentaire qui, dans l'autre position de la vanne rotative (17), ponte la boucle (9 -12) de la tubulure d'admission (1 - 4).

4. Moteur à combustion interne comportant un système d'admission d'air selon la revendication 1, caractérisé par le fait que le réglage de la longueur efficace de la tubulure d'admission a lieu en deux étapes par rotation de la vanne rotative (26) dans une position parmi deux positions possibles et que le réglage du débit d'air est réalisé par coulissement limité de la vanne rotative (26), la vanne rotative (26) comportant un canal transversal (29) qui, dans une position de la vanne rotative (26), forme un tronçon d'une boucle (27) de la tubulure d'admission (25) et un canal transversal (30) bifurqué supplémentaire étant prévu dans la vanne rotative (26), canal qui, dans la première position de la vanne rotative (26), forme également un tronçon de la boucle (27) de la tubulure d'admission (25) et, dans une deuxième position de la vanne rotative (26), ponte la boucle (27) de la tubulure d'admission (25) au moyen de la bifurcation (33).

5. Moteur à combustion interne comportant un système d'admission d'air selon la revendication 3 ou 4, caractérisé par le fait que la boucle (9 - 12; 27) de la tubulure d'admission (1 - 4; 25) est fermée d'un côté au moins par la vanne rotative (17; 26), lorsque ladite vanne rotative (17; 26) se trouve dans la position de pontage de la boucle.

6. Moteur à combustion interne comportant un système d'admission d'air selon l'une des revendications 3 à 5, caractérisé par le fait que les canaux transversaux (19, 20, 21; 29, 30) ne sont pas sécants et sont disposés dans la vanne rotative (17; 26), sensiblement transversalement à l'axe de cylindre (18; 28) .

7. Moteur à combustion interne comportant un système d'admission d'air selon l'une des revendications 1 à 6, caractérisé par le fait que l'axe de cylindre (18; 28) de la vanne rotative (17; 26) est sensiblement perpendiculaire à des plans définis par les boucles (9 - 12; 27) des tubulures d'admission (1 - 4; 25).

8. Moteur à combustion interne comportant un système d'admission d'air selon l'une des revendications 1 à 7, caractérisé par le fait qu'il est prévu une vanne rotative (17; 26) unique par moteur.

9. Moteur à combustion interne comportant un système d'admission d'air selon l'une des revendications 1 à 8, caractérisé par le fait que des moyens de réglage (23) sont liés à la vanne rotative (17; 26) et que la position de la vanne rotative (17; 26) peut être déterminée à l'aide des moyens de réglage (23) en fonction de valeurs de consigne préétablies et de caractéristiques de fonctionnement.
